# EUROPÄISCHE PATENTSCHRIFT

(11) **EP 3 502 537 B1**
(45) Veröffentlichungstag und Bekanntmachung des Hinweises auf die Patenterteilung: **30.12.2020**
(21) Anmeldenummer: 18199766.9
(22) Anmeldetag: 11.10.2018
(51) Int. Cl.: F16L 53/38

(54) **ANSCHLUSSVORRICHTUNG**
CONNECTION DEVICE
DISPOSITIF DE RACCORDEMENT

(30) Priorität: 19.12.2017 DE 102017223205
(43) Veröffentlichungstag der Anmeldung: 26.06.2019
(73) Patentinhaber: ContiTech Schlauch GmbH, 30165 Hannover (DE)
(72) Erfinder: Koch, Harald, 35110 Frankenau-Alten Lotheim (DE); Kirsch, Christof, 61194 Niddatal (DE)
(74) Vertreter: Finger, Karsten

(56) Entgegenhaltungen:
- EP-A1- 1 985 908
- DE-A1-102014 012 851
- DE-U1-202007 018 086
- DE-U1-202011 106 751

## Beschreibung

Die Erfindung betrifft eine Anschlussvorrichtung, aufweisend mindestens eine medienführende elektrisch beheizbare, mindestens einen Heizdraht aufweisende Schlauchleitung, mindestens einen Steckverbinder und mindestens ein elektrisches Heizelement, wobei der Steckverbinder mindestens einen ersten und einen zweiten Anschluss aufweist, wobei am ersten Anschluss die mindestens eine elektrisch beheizbare Schlauchleitung anschließbar ist, wobei der mindestens eine Heizdraht der mindestens einen Schlauchleitung an dem dem Steckverbinder zugeordneten Ende der Schlauchleitung aus der Schlauchleitung heraus lösbar ist und wobei die Steckverbindung mindestens teilweise ebenfalls elektrisch beheizbar ist, wobei der mindestens eine Heizdraht der mindestens einen elektrisch beheizbaren Schlauchleitung an dem jeweils zugeordneten Anschluss des Steckverbinders angeordnet ist, mindestens ein weiteres elektrisches Heizelement zwischen dem ersten und dem zweiten Anschluss des Steckverbinders liegend direkt auf dem Steckverbinder angeordnet ist und der Verbund aus elektrisch beheizbarer Schlauchleitung, erstem und zweitem Anschluss des Steckverbinders, den an dem jeweiligen Anschluss des Steckverbinders angebrachten Heizdraht der angeschlossenen Schlauchleitung und das mindestens eine weitere direkt auf dem Steckverbinder angeordnete Heizelement mittels eines Kunststoffmaterials im Wesentlichen vollständig umspritzt sind.

Derartige Anschlussvorrichtungen sind an sich bekannt und im Einsatz. Die EP 1985908 A1 offenbart eine derartige Anschlussvorrichtung. Die WO 2008151924 A2 zeigt eine Anschlussvorrichtung, bei der als Heizung für Teile des Steckverbinder die freigelegten Heizleiter der angeschlossenen elektrisch beheizbaren Schläuche Verwendung finden. Um diese zuverlässig applizieren zu können, sind zylindrische Heizleiteraufnahmen mit Wendelnut vorgesehen, die die Heizleiter sicher aufnehmen sollen. Die Heizleiteraufnahme ist im montierten Zustand durch eine aufschiebbare Hülse schützbar.

Mit dieser Anordnung lassen sich jedoch die anschlussseitigen Teilbereiche des Steckverbinders nur indirekt beheizen, da die Heizleiteraufnahmen noch zwischen dem eigentlich zu beheizenden Steckverbinder und den Heizdrähten liegt.

In der WO 2011054566A1 ist ein System zur Verbindung von Schlauchleitungen offenbart, bei welchem der Steckverbinder in Teilbereichen durch mindestens ein Heizelement beheizbar ist, welches in einen aufclipsbaren separaten Spannring eingebettet ist.

Einerseits ist dies mit einer relativ aufwendigen separaten Fertigung des aufclipsbaren Spannrings mit Heizelement verbunden, außerdem ist hier der Wärmeübergang zwischen Heizelement und Steckverbinder durch den Spannring behindert. Die Heizleistung, die für den Steckverbinder zur Verfügung steht, ist dabei abhängig von den Heizleistungen der Heizdrähte der jeweiligen Schlauchleitung und nicht unabhängig wählbar.

Der Erfindung liegt die Aufgabe zugrunde, eine Anschlussvorrichtung aufbauend auf dem genannten Stand der Technik derart zu verbessern, dass die Anschlussvorrichtung bei möglichst einfachem Aufbau eine optimal auf die jeweiligen Schlauchleitungen und den Steckverbinder unabhängig voneinander einstellbare Beheizung ermöglicht.

Diese Aufgabe wird dadurch gelöst, dass elektrische Anschlussenden des Heizdrahts der Schlauchleitung und des mindestens einen weiteren Heizelementes am Steckverbinder jeweils aus der Kunststoffumspritzung herausgeführt sind.

Mit dieser Anordnung ist gewährleistet, dass die Beheizung der mindestens einen Schlauchleitung und des Steckverbinders unabhängig voneinander möglich ist. Die Heizdrähte bzw. Heizelemente sind ohne den Wärmeübergang störende Heizleiteraufnahmen oder Spannringe unmittelbar an den zu beheizenden Stellen anbringbar. Die Umspritzung mit Kunstoffmaterial sorgt dabei nicht nur für den sicheren Zusammenhalt der Steckverbindung und den Schutz der Heizleiter und Heizelemente gegen mechanische Beschädigung, sondern sorgt auch für eine gute Wärmeisolierung.

In einer Weiterbildung ist das mindestens eine weitere direkt auf dem Steckverbinder angeordnete Heizelement durch Aufclipsen auf dem Steckverbinder fixiert.

Dies hat den Vorteil, dass die Montage des Heizelements auf dem Steckverbinder einfach handhabbar und bei entsprechenden Stückzahlen auch automatisierbar ist.

Anhand der Zeichnung wird ein Beispiel der Erfindung näher erläutert es zeigt:
Fig. 1 eine erfindungsgemäße Anschlussvorrichtung in einer perspektivischen Ansicht in einem teilfertigen Zustand,
Fig. 2 die erfindungsgemäße Anschlussvorrichtung im fertigen Zustand in einer perspektivischen Ansicht.

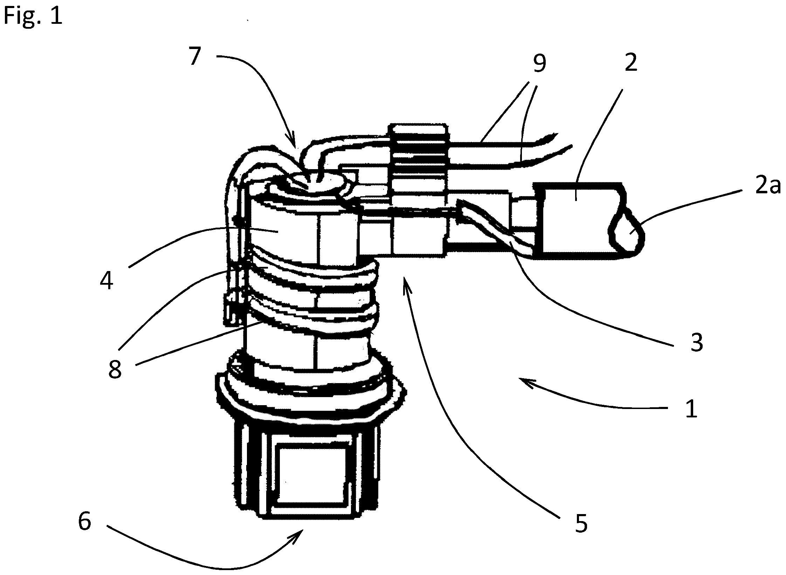

Die Fig. 1 zeigt eine erfindungsgemäße Anschlussvorrichtung 1 in einer perspektivischen Ansicht in einem teilfertigen Zustand.

Die Anschlussvorrichtung 1 weist eine Schlauchleitung 2 mit einer elastomeren Matrix 2A auf, die mittels eines Heizdrahtes 3 elektrisch beheizbar ist. Der elektrische Heizdraht 3 ist dabei in die elastomere Matrix 2 eingebettet.

Die Anschlussvorrichtung 1 weist weiter einen Steckverbinder 4 auf, der einen ersten Anschluss 5 und einen zweiten Anschluss 6 aufweist. Der Anschluss 6 ist als Steckanschluss ausgebildet und dient zur Verbindung mit einem hier nicht gezeigten weiteren medienführenden Element.

Die Schlauchleitung 2 ist dem Anschluss 5 des Steckverbinders 4 zugeordnet und mit diesem fluidführend verbunden. Der Heizdraht 3 ist an seinem dem Anschluss 5 zugeordneten Ende in einer vorbestimmten Länge aus elastomeren Matrix 2A herausgeführt und in hier nicht mehr gezeigte Weise mit einem elektrischen Verbinder 7 elektrisch leitend verbunden.

Der Steckverbinder 4 weist ein elektrisches Heizelement 8 auf, welches direkt und ohne Zwischenlager auf dem Steckverbinder 4 angebracht ist. Das Heizelement 8 ist ebenfalls in nicht mehr gezeigte Weise mit dem elektrischen Verbinder 7 elektrisch leitend verbunden.

Vom elektrischen Verbinder 7 ausgehend sind zwei Anschlusskabel 9 durch eine Kabelhalterung 10 geführt. Die Anschlusskabel 9 können beispielsweise einen Stecker oder andere beliebige elektrische Verbindungselemente aufweisen, von denen hier keines gezeigt ist.

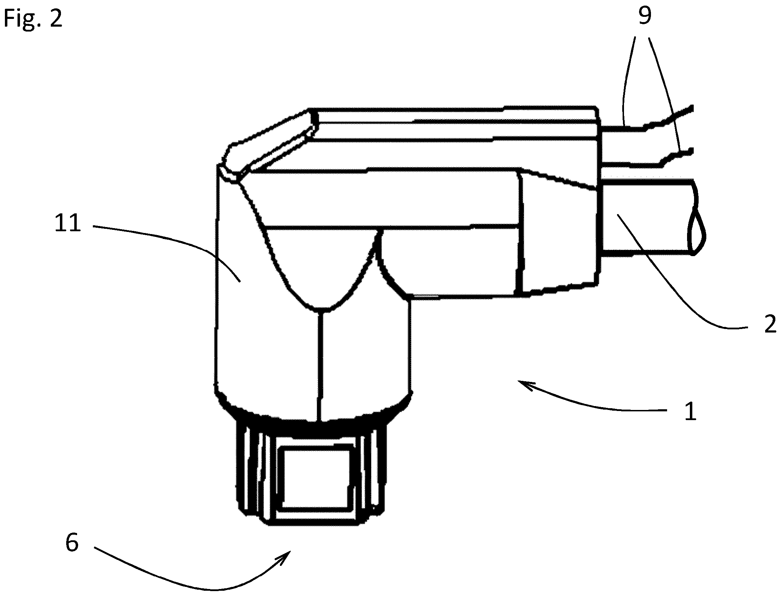

In Fig. 2 ist die Anschlussvorrichtung 1 im fertigen Zustand gezeigt. Von den Elementen der Anschlussvorrichtung 1 sind hier nur noch der Anschluss 6, die Schlauchleitung 2 und die Anschlusskabel 9 sichtbar, da alle anderen Bauteile der Anschlussvorrichtung 1 von einem Kunststoffmaterial 11 umhüllt sind. Diese Kunststoffumhüllung 11 ist beispielsweise durch Umspritzen herstellbar und schützt die elektrischen Einrichtungen gegen Umwelteinflüsse und mechanische Beschädigung. Außerdem ist durch die Umhüllung 11 eine gute Wärmeisolierung gegeben.

### Bezugszeichenliste

### (Teil der Beschreibung)

- 1: Anschlussvorrichtung
- 2: Schlauchleitung
- 2A: elastomere Matrix der Schlauchleitung 2
- 3: Heizdraht
- 4: Steckverbinder
- 5, 6: Anschlüsse des Steckverbinders 4
- 7: elektrischer Verbinder
- 8: Heizelement des Steckverbinders 4
- 9: Anschlusskabel
- 10: Kabelhalterung
- 11: Kunststoffumhüllung

## Patentansprüche

1. Anschlussvorrichtung (1), aufweisend mindestens eine medienführende elektrisch beheizbare, mindestens einen Heizdraht (3) aufweisende Schlauchleitung (2, 2A), mindestens einen Steckverbinder (4) und mindestens ein elektrisches Heizelement, wobei der Steckverbinder (4) mindestens einen ersten (5) und einen zweiten Anschluss (6) aufweist, wobei am ersten Anschluss (5) die mindestens eine elektrisch beheizbare Schlauchleitung (2, 2A) anschließbar ist, wobei der mindestens eine Heizdraht (3) der mindestens einen Schlauchleitung (2, 2A) an dem dem Steckverbinder (4) zugeordneten Ende der Schlauchleitung (2, 2A) aus der Schlauchleitung (2, 2A) heraus lösbar ist und wobei der Steckverbinder (4) mindestens teilweise ebenfalls elektrisch beheizbar ist, wobei der mindestens eine Heizdraht (3) der mindestens einen elektrisch beheizbaren Schlauchleitung (2, 2A) an dem jeweils zugeordneten Anschluss (5, 6) des Steckverbinders (4) angeordnet ist, mindestens ein weiteres elektrisches Heizelement (8) zwischen dem ersten und dem zweiten Anschluss (5, 6) des Steckverbinders (4) liegend direkt auf dem Steckverbinder (4) angeordnet ist und der Verbund aus einem ersten Teil der elektrisch beheizbaren Schlauchleitung (2, 2A), erstem Anschluss (5) des Steckverbinders (4), dem an dem jeweiligen Anschluss des Steckverbinders (4) angebrachten Heizdraht (3) der angeschlossenen Schlauchleitung (2, 2A) und das mindestens eine weitere direkt auf dem Steckverbinder (4) angeordnete Heizelement (8) mittels eines Kunststoffmaterials (11) im Wesentlichen vollständig umspritzt sind,
**dadurch gekennzeichnet, dass**
elektrische Anschlussenden des Heizdrahts (3) der Schlauchleitung (2, 2A) und des mindestens einen weiteren Heizelementes am Steckverbinder (4) jeweils aus der Kunststoffumspritzung (11) herausgeführt sind.

2. Anschlussvorrichtung (1) nach Anspruch 1, **dadurch gekennzeichnet, dass** das mindestens eine weitere direkt auf dem Steckverbinder (4) angeordnete Heizelement (8) durch Aufclipsen auf dem Steckverbinder (4) fixiert ist.

## Claims

1. Connection apparatus (1) having at least one media-carrying electrically heatable hose line (2, 2A) which has at least one heating wire (3), at least one plug-in connector (4) and at least one electrical heating element, wherein the plug-in connector (4) has at least one first connection (5) and one second connection (6), wherein the at least one electrically heatable hose line (2, 2A) can be connected to the first connection (5), wherein the at least one heating wire (3) of the at least one hose line (2, 2A) at that end of the hose line (2, 2A) which is associated with the plug-in connector (4) can be detached from the hose line (2, 2A), and wherein the plug-in connector (4) is at least partially likewise electrically heatable,
wherein the at least one heating wire (3) of the at least one electrically heatable hose line (2, 2A) is arranged on the respectively associated connection (5, 6) of the plug-in connector (4), at least one further electrical heating element (8) is arranged between the first and the second connection (5, 6) of the plug-in connector (4) in a manner lying directly on the plug-in connector (4), and the combination comprising a first part of the electrically heatable hose line (2, 2A), a first connection (5) of the plug-in connector (4), the heating wire (3), which is attached to the respective connection of the plug-in connector (4), of the connected hose line (2, 2A) and the at least one further heating element (8) which is arranged directly on the plug-in connector (4) are substantially completely encapsulated by injection moulding by means of a plastic material (11),
**characterized in that** the electrical connection ends of the heating wire (3) of the hose line (2, 2A) and of the at least one further heating element on the plug-in connector (4) are each guided out of the plastic injection-moulded encapsulation (11).

2. Connection apparatus (1) according to Claim 1, **characterized in that** the at least one further heating element (8) which is arranged directly on the plug-in connector (4) is fixed on the plug-in connector (4) by being clipped on.

## Revendications

1. Dispositif de raccordement (1), présentant au moins une conduite tubulaire (2, 2A) conduisant des fluides, pouvant être chauffée électriquement, présentant au moins un filament chauffant (3), au moins un connecteur enfichable (4) et au moins un élément chauffant électrique, le connecteur enfichable (4) présentant au moins un premier raccord (5) et un deuxième raccord (6), l'au moins une conduite tubulaire (2, 2A) pouvant être chauffée électriquement pouvant être raccordée au premier raccord (5), l'au moins un filament chauffant (3) de l'au moins une conduite tubulaire (2, 2A) pouvant être détaché de la conduite tubulaire (2, 2A) à l'extrémité de la conduite tubulaire (2, 2A) associée au connecteur enfichable (4), et le connecteur enfichable (4) pouvant au moins en partie être également chauffé électriquement,
l'au moins un filament chauffant (3) de l'au moins une conduite tubulaire (2, 2A) pouvant être chauffée électriquement étant disposé au niveau du raccord respectivement associé (5, 6) du connecteur enfichable (4), au moins un élément chauffant électrique supplémentaire (8) étant disposé en s'appliquant directement sur le connecteur enfichable (4) entre le premier et le deuxième raccord (5, 6) du connecteur enfichable (4), et l'assemblage constitué d'une première partie de la conduite tubulaire (2, 2A) pouvant être chauffée électriquement, du premier raccord (5) du connecteur enfichable (4), du filament chauffant (3) de la conduite tubulaire raccordée (2, 2A), monté au niveau du raccord respectif du connecteur enfichable (4), et l'au moins un élément chauffant (8) supplémentaire disposé directement sur le connecteur enfichable (4) étant essentiellement surmoulé complètement au moyen d'une matière plastique (11),
**caractérisé en ce que** des extrémités de raccordement électriques du filament chauffant (3) de la conduite tubulaire (2, 2A) et de l'au moins un élément chauffant supplémentaire au niveau du connecteur enfichable (4) sont à chaque fois guidées hors du surmoulage en plastique (11).

2. Dispositif de raccordement (1) selon la revendication 1, **caractérisé en ce que** l'au moins un élément chauffant supplémentaire (8) disposé directement sur le connecteur enfichable (4) est fixé par enclipsage sur le connecteur enfichable (4).
